# EUROPEAN PATENT APPLICATION

(11) **EP 0 989 312 A1**
(43) Date of publication of application: **29.03.2000**
(21) Application number: 98830549.6
(22) Date of filing: 22.09.1998
(51) Int. Cl.: F16B 45/02, A63B 29/02

(54) **An accident preventing coupling device for snaplinks used for mountaineering, caving and similar activities**

(71) Applicant: Camp S.p.A., 23884 Premana (Lecco) (IT)
(72) Inventor: Codega, Antonio, 23834 Premana (Lecco) (IT)
(74) Representative: Perani, Aurelio

(57) **Abstract**

An engagement device for snap-links for mountaineering, caving, accident-prevention and similar activities, of the type comprising a body (1) constituted by a profiled element (2) bent to a substantially C-shaped configuration with ends (3, 4) facing one another and spaced a predetermined distance apart, a rod-like lever (5) having one of its ends (5a) articulated by a pin (6) to one (4) of the facing ends (3, 4) of the C-shaped body, an axial portion of the free end (5b) of the lever being engaged releasably along a corresponding axial portion of the other end (3) of the C-shaped body in order to close the body to form a ring, the lever (5) being movable in the plane defined by the C-shaped body, and a resilient member (7) urging the free end (5b) of the rod-like lever (5) against the corresponding end (3) of the C-shaped body, the cross-sections of the rod-like lever (5) and of the profiled element (1) constituting the C-shaped body being substantially identical and uniform throughout their extent.

The engagement between the free end (5b) of the rod-like lever (5) and the corresponding end (3) of the C-shaped body advantageously comprises a double fixed joint between male and female elements in which the male element (3, 12) of one joint is carried by the female element (8, 13) of the other joint.

## Description

The present invention relates to a coupling device for snap-links for mountaineering, caving, accident-prevention and similar activities, of the type comprising a body constituted by a profiled element bent to a substantially C-shaped configuration with ends facing one another and spaced a predetermined distance apart, a rod-like lever having one of its ends articulated by a pin to one of the facing ends of the C-shaped body, an axial portion of the free end of the lever being engaged releasably along a corresponding axial portion of the other end of the C-shaped body in order to close the body to form a ring, the lever being movable in the plane defined by the C-shaped body, and a resilient member urging the free end of the rod-like lever against the corresponding end of the C-shaped body, the cross-sections of the rod-like lever and of the profiled element constituting the C-shaped body being substantially identical and uniform throughout their extent.

The term snap-link is intended also to define herein devices currently defined by the European standards as "connectors".

Snap-links of the type specified above are known in the art; some structural examples are described in WO 88/03826 and FR-A-1,518,783.

As is known, two basic problems are encountered in the production of snap-links; one relates to the resistance which the snap-link should offer to any accidental breakage or opening of the ring formed by the C-shaped body and by the lever, and the other relates to the elimination, particularly in the region of the closure of the snap-link, of projecting parts by which the rope, or a tape, could be caught in use when it is inserted in and removed from the snap-link or which in some way give rise to potentially dangerous situations for the user.

Although the known construction described in FR-A-1,518,783 represents an adequate mechanical solution with regard to the strength of the snap-link, it does not solve the problems of possible jamming of the rope in use, or of excessive wear since the connecting members between the end of the lever and the corresponding end of the C-shaped body comprise a hook which, when the snap-link is open, remains projecting and interferes with the rope when it is passed through in order to be inserted in the snap-link or removed therefrom.

The construction shown in WO 88/03826 also fails to solve the above-mentioned problems completely because the T-shape of one of the end elements which are intended to be coupled in order to close the snap-link in any case forms angular surfaces which may interfere with the rope by rubbing against it and may give rise to conditions potentially dangerous to the user. Moreover, the formation of a T-shaped end leads to the presence of a shank of reduced cross-section which, in some cases, could penalize the tensile strength of the snap-link.

The object of the present invention is that of providing a snap-link of the type mentioned above having a coupling device which reduces possible interference with the rope without penalizing the tensile strength of the closed snap-link.

This object is achieved by the coupling device defined by Claim 1 below.

The invention will be described in greater detail with reference to a preferred embodiment thereof, given purely by way of non-limiting example and illustrated in the appended drawings, in which:
Figure 1 is a perspective view of the snap-link in the open position,
Figure 2 is a perspective view of the snap-link of Figure 1, in the closed position,
Figure 3 is a longitudinal section of the coupling device.

With reference to the drawings, the substantially C-shaped body, generally indicated 1, is constituted by a metal profiled element 2 having a substantially circular cross-section.

The material is the conventional material in the field of snap-links for the intended uses.

The facing ends of the C-shaped body, indicated 3 and 4 respectively, are spaced apart by a predetermined distance which constitutes the opening of the snap-link, through which the rope is passed in conventional manner.

A rod-like lever 5 having a cross-section substantially identical to that of the profiled element 2, is connected by its end 5a to the end 4 of the body 1 by means of a pin 6, arranged in a manner such as to render the lever 5 movable in the plane defined by the C-shaped body 1.

The opposite end 5b of the lever 5 is intended to engage the corresponding end 3 of the body 1 in the manner which will be described below.

A resilient member, generally indicated 7, is housed in an axial cavity of the lever 5 in conventional manner. This resilient member 7 is intended, again in conventional manner, to urge the end 5b of the lever 5 against the end 3 of the body 1.

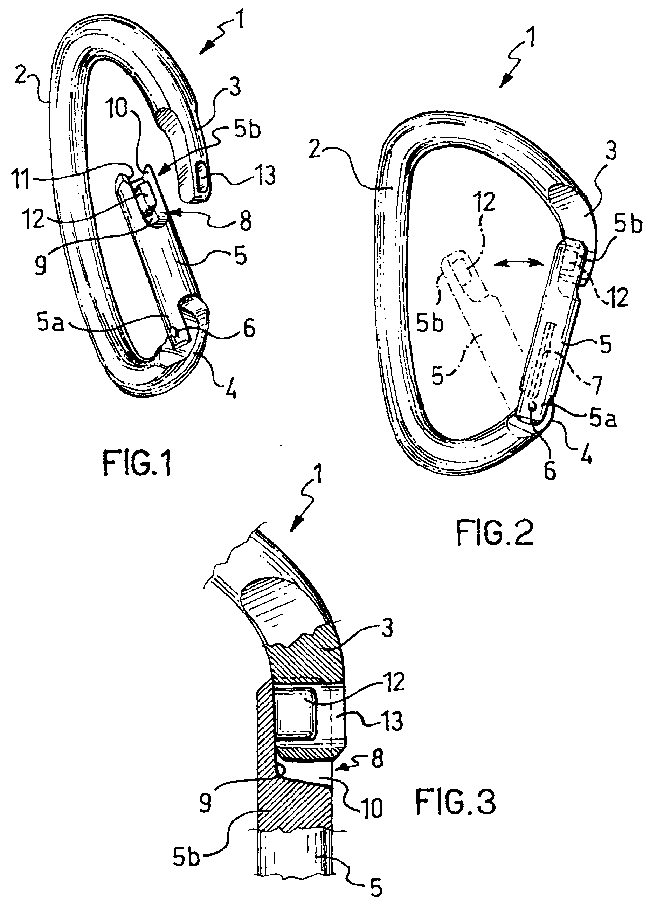

The lever 5 is consequently movable resiliently between a position shown in Figure 1 and in broken outline in Figure 2, in which the snap-link is open, and a position shown in Figure 2, in which the snap-link is closed.

The movement of the lever 5 enables a rope, not shown in the drawings, to be inserted in the snap-link and removed therefrom, in known and conventional manner.

The end 5b of the lever 5 has a slot 8 of quadrilateral cross-section with a base wall 9 and with side walls 10 and 11.
This slot extends axially for a predetermined distance from the head end of the lever 5 at which end the slot is open.

As can be seen in greater detail in Figure 3, the slot 8 engages the end 3 of the body 1, forming a first fixed joint in which the end 3 constitutes the male element and the slot 8 the female element.

The end 3 is shaped, at least in the portion which engages the slot 8 frontally, with a cross-section substantially identical to that of the slot 8 the base wall of which is abutted by the end 3 in the closure position.

A second fixed joint is provided between the end 5b of the lever 5 and the end 3 of the body 1.

This second fixed joint is constituted by a tooth 12 fixed to the base wall 9 of the slot 8 and a recess 13 formed in the end 3.

In the embodiment shown, this recess extends through the entire thickness of the end 3 although, naturally, it may be open on the side facing the tooth 12 and closed on the opposite side.

The male element of this second fixed joint is constituted by the tooth 12 and is carried by the female element or slot 8 of the other fixed joint, whilst the female element constituted by the recess 13 is carried by the male element, represented by the end 3, of the other fixed joint.

The tooth 12 and the corresponding recess 13 have substantially rectangular longitudinal sections with their major axes extending axially relative to the rod 5.

Since the tooth 12 is completely fitted in the slot 8, it does not constitute an element which interferes dangerously with the rope when the rope passes over the end 5b of the lever 5 but, at the same time, the tooth 12 provides the closure with additional security, constituting, with the end 3, a further fixed engagement in addition to the engagement brought about by the insertion of the end 3 in the slot 8.

In the embodiment shown, the end 3 of the body 1 is also completely free of projections which might dangerously interfere with the rope in some way.

Although, in the embodiment shown, the slot 8 and the tooth 12 are formed in the end 5b of the lever 5, they may be formed in wholly equivalent manner in the end 3 of the body 1, the recessed shape 13 of which would in this case be moved to the end 5b of the lever 5.

Naturally, the dimensions and materials may be varied according to requirements.

## Claims

1. A coupling device for snap-links for mountaineering, caving, accident-prevention and similar activities, of the type comprising a body (1) constituted by a profiled element (2) bent to a substantially C-shaped configuration with ends (3, 4) facing one another and spaced a predetermined distance apart, a rod-like lever (5) having one (5a) of its ends articulated by a pin (6) to one (4) of the facing ends (3, 4) of the C-shaped body, an axial portion of the free end (5b) of the lever being engaged releasably along a corresponding axial portion of the other end (3) of the C-shaped body in order to close the body to form a ring, the lever (5) being movable in the plane defined by the C-shaped body, and a resilient member (7) urging the free end (5b) of the rod-like lever (5) against the corresponding end (3) of the C-shaped body, the cross-section of the rod-like lever (5) and of the profiled element (1) constituting the C-shaped body being substantially identical and uniform throughout their extent, characterized in that the engagement between the free end (5b) of the rod-like lever (5) and the corresponding end (3) of the C-shaped body comprises a double fixed joint between male and female elements in which the male element (3, 12) of one joint is carried by the female element (8, 13) of the other joint.

2. A device according to Claim 1, characterized in that the male element of one of the joints is constituted by the end (3) of the C-shaped body with which the free end (5b) of the lever (5) is engaged, and the female element is constituted by a slot (8) formed axially in the rod-like lever (5), the slot (8) being open solely in the region of the head section of the free end (5b) of the lever and in an axial portion facing a corresponding axial portion of the end (3) of the C-shaped body.

3. A device according to Claims 1 and 2, characterized in that the male element of the other joint is constituted by a tooth (12) projecting from the base (9) of the axial slot (8) of the lever (5) and the female element is constituted by a recess (13) formed in the axial portion of the end (3) of the C-shaped body, the recess (13) being open towards the tooth (12).

4. A device according to Claim 3, characterized in that the recess (13) extends through the end (3) of the C-shaped body.

5. A device according to Claims 3 and 4, characterized in that the tooth (12) and the recess (13) have substantially rectangular longitudinal sections with major axes extending axially relative to the rod-like lever (5).

6. A device according to Claim 3, characterized in that the internal cross-section of the slot (8) is substantially quadrilateral with a base wall (9) and opposed side walls (10, 11), and the end (3) of the C-shaped body, at least in the portion which fits as a male element in the slot (8), has a cross-section substantially identical to that of the slot (8).

7. A device according to Claim 6, characterized in that the base wall (9) of the slot (8) forms an abutment for the corresponding end (3) of the C-shaped body. 8. A device according to Claims 1 to 7, characterized in that the tooth (12) is housed completely in the slot (8).
